# EUROPEAN PATENT SPECIFICATION

(11) **EP 3 089 931 B1**
(45) Date of publication and mention of the grant of the patent: **11.09.2019**
(21) Application number: 14830625.1
(22) Date of filing: 11.12.2014
(51) Int. Cl.: B65H 23/035, B65H 23/032, B29D 30/44, B29D 30/30

(54) **METHOD FOR GUIDING AN ELONGATED ELEMENT FOR A PROCESS FOR OBTAINING VEHICLE WHEEL TYRES AND APPARATUS FOR OBTAINING VEHICLE TYRES**
VERFAHREN ZUR FÜHRUNG EINES LANGGESTRECKTEN ELEMENTES FÜR EIN VERFAHREN ZUR HERSTELLUNG EINES FAHRZEUGLUFTREIFENS SOWIE VORRICHTUNG ZUR GEWINNUNG VON FAHRZEUGREIFEN
PROCÉDÉ DE GUIDAGE D'UN ÉLÉMENT ALLONGÉ POUR UN PROCÉDÉ DE FABRICATION DE PNEUS DE ROUE DE VÉHICULE ET APPAREIL DE FABRICATION DE PNEUS DE ROUE DE VÉHICULE

(30) Priority: 30.12.2013 IT MI20132218
(43) Date of publication of application: 09.11.2016
(73) Proprietor: Pirelli Tyre S.p.A., 20126 Milano (IT)
(72) Inventor: BIGOGNO, Mauro, I-20126 Milano (IT); PULICI, Lorenzo, I-20126 Milano (IT)
(74) Representative: Brasca, Marco
(86) International application number: PCT/IB2014/066795
(87) International publication number: WO 2015/101853

(56) References cited:
- EP-A2- 0 562 228
- EP-A2- 0 791 551
- AU-B2- 495 677
- DE-C1- 4 439 639
- US-A- 3 949 920
- US-A- 3 974 953
- US-A- 5 524 804

## Description

### Field of the invention

The object of the present invention is a method for guiding an elongated element for a process for obtaining tyres for vehicle wheels. The present invention also refers to a process and an apparatus implementing such method.

A tyre for vehicle wheels generally comprises a carcass structure comprising at least one carcass ply having axially opposite end flaps engaged with respective anchoring annular structures integrated in the zones normally identified with the name of "beads". The carcass structure is associated with a belt structure comprising one or more belt layers, situated in radial superimposition with respect to each other and with respect to the carcass ply. In radially externally position with respect to the belt structure, a tread band made of elastomeric material is applied, like other semifinished products constituting the tyre. Respective sidewalls made of elastomeric material are also applied in axially external position on the lateral surfaces of the carcass structure, each extended from one of the lateral edges of the tread band up to the respective anchoring annular structure to the beads. Following the building of the green tyre actuated by means of assembly of respective semifinished products, a moulding and vulcanisation treatment is generally executed, aimed to cause the structural stabilisation of the tyre by means of cross-linking of the elastomeric material as well as impart a desired tread pattern on the tread band and possible distinctive graphic marks at the sidewalls.

With the term "elastomeric material", it is intended a composition comprising at least one elastomeric polymer and at least one reinforcement filler. Preferably, such composition also comprises additives such as cross-linking agents and/or plasticisers. Due to the presence of the cross-linking agents, such material can be cross-linked by means of heating, so as to form the final manufactured product. By "elongated element" it is intended an element in which one dimension is predominant with respect to the other dimensions. Preferably said elongated element is only made of elastomeric material or comprising further structural elements. Preferably said elongated element is supplied on a forming drum in order to form at least one component of a tyre.

Preferably the elongated element is strip-shaped, with a flattened section. Preferably, the further structural elements comprise one or more textile or metallic reinforcement cords. Such reinforcement cords are preferably arranged parallel to each other and preferably extend along the longitudinal direction of the elongated element itself. Said elongated element is preferably dispensed in a circumferential sense onto a forming drum, e.g. from a reel or from an extruder. Preferably, the elongated element is cut to size before the dispensing on the forming drum. Preferably, at the end of the winding on the forming drum, a head end of the cut-to-size elongated element is joined to a tail end of the same cut-to-size elongated element.

### Background of the invention

The document WO 2013/011396, on behalf of the same Applicant, illustrates an apparatus for building tyres for vehicle wheels in which one forming drum at a time is loaded on a shuttle movable on a guide along a deposition line. The shuttle is moved on the guide in the two running senses in order to bring it in succession to stations for dispensing the elongated elements. At each of the dispenser stations, one or more elongated elements are advanced on flat, tilted transport surfaces, cut to size and wound on a surface that is radially external with respect to the forming drum carried by the shuttle.

The document US 5,720,837 illustrates an apparatus for supplying a belt strip on a rotating building drum. The apparatus comprises a supply reel that receives the material for the belt, means for unrolling the material from the reel, means for conveying the unrolled material up to the building drum and cutting means for cutting the material in a belt strip. The apparatus also comprises means for adjusting the shape of at least one side of the belt strip in a manner so as to make it assume a reference shape. The adjustment method provides for laterally moving a roller conveyor with respect to a successive conveyor belt during the passage of the material from one to the other. The roller conveyor also comprises guide rollers arranged on one side of the belt strip.

The document US 7,758,714 illustrates a method for obtaining a structural element of a tyre, according to which a continuous strip-like element, reinforced with cords, is cut into a plurality of strips of predetermined length. The strips are arranged adjacent to each other in succession on a transfer drum, with the longitudinal edges partially superimposed to form the structural component that is then wound on a forming drum. Guide elements guide the longitudinal edges of the continuous strip-like element in a manner such that the latter is correctly positioned on the transfer drum.

Document AU495677 discloses an apparatus for transversely adjusting a strip of longitudinally moving fabric in a tire building apparatus, comprising first and second carriage means and control means for simultaneously moving the first and second carriage means toward and away from each other. The control means comprises bias means, such as a counterweight, for urging each of said carriage means into contact with a respective side edge of the strip for transverse adjustment thereof.

The Applicant has observed that the continuous evolution of tyres, together with the need to provide different models, makes it necessary to obtain equipment, for example building equipment, that is versatile, highly productive and at the same time capable of automatically processing the elongated elements in a repeatable and constant manner.

In the scope of the production of the different types and sizes of tyres, elongated elements of various transverse sizes are used for obtaining the structural components, such elements comprising elastomeric materials possibly reinforced by means of metallic and/or polymeric threads.

The Applicant has observed that the quality of the product appears affected by the mode of deposition of the elongated elements on the forming drum itself, which in turn depends on the correct management of said elongated elements by the devices placed upstream of the drum, i.e. devices for dispensing, conveying and cutting the elongated element and the abovementioned flat and/or tilted transport surfaces, like those described for example in the document WO 2013/011396. The Applicant has observed that in the known devices, the elongated elements risk being deformed (stretched, twisted, bent, crushed, etc.) during their passage into the abovementioned devices, and they arrive thus deformed at the terminal ends of the transport surfaces, and are therefore arranged on the forming drums in an incorrect manner.

The Applicant has further observed that the abovementioned deformations negatively affect the spatial positioning of the elongated element on the transport surfaces and hence on the forming drum. In particular, the axial position thereof on the forming drum risks being incorrect.

The Applicant has also observed that the devices of known type provided with elements that rest against and guide only one of the two longitudinal edges of the elongated element, such as that for example illustrated in the document US 5,720,837, are not capable of ensuring the correct position thereof, since said elongated element is not constrained on both sides. Furthermore, such known devices do not allow centring the elongated element at the centreline plane of the forming drum.

The Applicant has further observed that the devices of known type provided with elements that rest against and guide both longitudinal edges of the elongated element, such as that described for example in the document US 7,758,714, risk crushing/ruining the elongated element since they exert an excessive, uncontrolled pressure on said edges.

The Applicant has also observed that the lateral crushing of the elongated element tends to laterally compress the material, thus causing a length variation thereof which, in the elongated elements that are cut to size and then joined on the forming drum, risks compromising the correct joint. The size of the overlap of the head end and tail end is in fact variable between one deposition and another, and such variability cannot be controlled.

### Summary

In such context, the Applicant has addressed the problem of obtaining an apparatus capable of automatically processing the elongated elements in a precise, repeatable and constant manner, in order to correctly place the same on the forming drum and build high quality tyres, with uniform structural characteristics along their circumferential extension.

The Applicant has in particular addressed the problem of guiding each elongated element with precision towards the forming drum, reducing the deformations to a minimum and seeking to replicate the design characteristics as much as possible. The Applicant has also addressed the problem of precisely guiding elongated elements having transverse size and structural characteristics different from each other, such as elongated elements with metallic reinforcement threads and elongated elements with textile reinforcement threads intended for components of tyres of different types and size.

The Applicant has found that such problems can be resolved by controlling the pressure exerted against the opposite longitudinal edges of the continuous elongated element by lateral abutment guides adapted to guide said elongated element along a supply path that leads to the forming drum.

In particular, the Applicant has found that said pressure can be reduced to the minimum necessary by exploiting the action of a counterweight.

More specifically, according to one aspect, the present invention relates to a method for guiding an elongated element for a process for obtaining tyres for vehicle wheels, wherein the method is according to claim 1.

According to a different aspect, the present description relates to a process for obtaining tyres for vehicle wheels, comprising:
dispensing an elongated element comprising an elastomeric material.

Preferably the process for obtaining tyres comprises supplying the elongated element along a supply path up to a forming drum, wherein the elongated element extends longitudinally along said supply path.

Preferably the process for obtaining tyres comprises placing said elongated element on a surface that is radially external with respect to the forming drum. Preferably, the supply comprises: guiding the elongated element along a supply direction between two lateral abutment guides resting against opposite longitudinal edges of said elongated element.

Preferably the supply comprises maintaining said lateral abutment guides against the respective longitudinal edges of the elongated element.

Preferably, transmission elements are configured to allow a weight to move under the action of the gravity force and to drive at least one of the lateral abutment guides therewith against a respective longitudinal edge of the elongated element. According to a different aspect, the present invention relates to an apparatus for obtaining tyres for vehicle wheels according to claim 4.

The Applicant deems that the use of the suitably-calibrated weight allows dynamically adapting the distance between the lateral abutment guides to the variations of the width of the elongated element and/or to the irregularities of its longitudinal edges, maintaining it in the correct lateral position and without exerting excessive pressures such to alter the characteristics thereof.

In particular, the Applicant deems that the solution according to the present invention prevents the generation of variable and damaging tensions along the elongated element due, in the plants of the prior art, to the excessive and inconstant crushing of the elongated element itself between the lateral guide elements.

Indeed, during the advancement of the elongated element, the movable lateral abutment guide(s) according to the invention is moved transversely (with respect to the supply direction) in both directions, following the width variations of the elongated element under the thrust exerted, in one sense, by the edges of the elongated element (which tend to move one guide away from the other) and the thrust exerted, in the opposite sense, by the weight (which instead tends to move one guide closer to the other).

The Applicant finally deems that the movement of the movable lateral abutment(s) guide obtained in this manner is quite fluid, since friction is reduced to a minimum. The present invention, in at least one of the aforesaid aspects, can have one or more of the preferred characteristics that are described hereinbelow.

Preferably, provision is made such that the elongated element is cut to size before the deposition on the forming drum and that, at the end of deposition, a head end of said elongated element is joined to a tail end.

Preferably, the apparatus comprises at least one cutting unit, preferably operatively active upstream of the forming drum.

The Applicant has verified that the use of the suitably-calibrated weight ensures that the length of the cut-to-size elongated element is always the design length and ensures that the head end perfectly matches with the tail end and that the joint is correctly executed and always has the same characteristics.

Preferably, only one of the lateral abutment guides is movable while the other is fixed. Such solution is, for example employed to ensure the lateral position of the elongated element at an axially internal or axially external position of the forming drum. Such solution is preferable when it is necessary to deposit two elongated elements on opposite sides of an equatorial plane of the forming drum (such as, for example, the cut-to-size elongated elements intended to form the under-belt reinforcements, the sidewalls, the bead reinforcements layers (flippers), the bead protection layers (chafers)).

Preferably, provision is made to drive both lateral abutment guides, by means of said at least one weight movable under the action of the gravity force, against the respective longitudinal edges.

Preferably, the lateral abutment guides are movable, mutually approaching or moving apart from each other.

Preferably, the lateral abutment guides are symmetrically movable with respect to a centreline plane of said continuous elongated element.

Such solution is for example employed to ensure the axially central position of the elongated element on the forming drum. Such solution is preferable when it is necessary to deposit only one elongated element that is centred with respect to the equatorial plane of the forming drum (such as the cut-to-size elongated element intended to form the air-impermeable rubber layer (liner), one of the carcass plies, one of the belt layers, the tread band).

Preferably, both lateral abutment guides are movable and connected to said at least one weight.

In a modified embodiment, each of the lateral abutment guides is movable and connected to a respective weight.

The same weight can drive both lateral abutment guides therewith against the respective longitudinal edges of the elongated element or each of the lateral abutment guides is driven by a respective weight.

Preferably, the lateral aligning device comprises a synchronisation mechanism operatively connected to both said movable lateral abutment guides and configured for synchronising movement thereof.

The use of the synchronisation mechanism also allows using a single weight directly connected to only one of the lateral abutment guides in order to move them both.

Preferably, the synchronisation mechanism comprises a pin freely rotatable around a main axis thereof and a pair of rods or belts, each connecting the pin with a respective movable lateral abutment guide.

The above-described synchronisation mechanism is structurally simple, reliable and inexpensive.

Preferably, each of the lateral abutment guides exerts a pressure on the respective longitudinal edge comprised between about 50g/cm² and about 200g/cm², more preferably equal to about 75g/cm².

Preferably, said at least one weight has a mass comprised between about 150g and about 450g, more preferably equal to about 300g.

Preferably, said at least one weight is calibrated to exercise a pressure on the longitudinal edges of the elongated element comprised between about 50g/cm² and about 200g/cm², more preferably equal to about 75g/cm².

Such pressure can be the correct pressure for preventing the alteration of the elongated element, such that once it is deposited on the forming drum, it forms the respective component of the tyre.

Preferably, the weight is hung on said transmission elements.

Preferably, the weight is movable along a vertical path.

A vertical movement of the weight corresponds with a horizontal movement of the lateral abutment guide(s).

Preferably, said guide system comprises one or more rods on which the weight is inserted or between which the weight is slidably guided.

Preferably, the rod or rods is/are vertically oriented.

The guide system prevents the weight from oscillating and thus exerting a variable pressure (no longer corresponding to the predefined pressure) on the elongated element.

Preferably, it is possible to vary the pressure exerted by the weight on the elongated element.

Preferably, for such purpose, provision is made such that the weight can be substituted.

Preferably, in order to vary the pressure exerted by the weight, the guide system can be tilted. In this manner, the component of the weight force that drives the lateral abutment guide is only that parallel to the guide system.

Preferably, the transmission elements comprise at least one flexible element (such as a cable, a chain, a belt) connected to the weight and to the movable lateral abutment guide.

Preferably, the transmission elements comprise at least one transmission pulley. Preferably, the flexible element is at least partially wound around the transmission pulley.

The flexible element has one end connected to the weight and the opposite end constrained to the movable lateral abutment guide.

The described structure is very simple and inexpensive and does not require frequent maintenance.

Preferably, the lateral aligning device comprises a rail oriented transversely with respect to the supply direction, to which the movable lateral abutment guide is slidably constrained. The movable lateral abutment guide translates along the transverse direction on said rail.

Preferably, the lateral abutment guide is coupled to the rail by means of small wheels. This solution contributes to further reducing friction.

Preferably, the lateral aligning device comprises an actuator configured to move one lateral abutment guide away from the other.

Preferably, the actuator is of pneumatic type.

Preferably, the actuator is movable between a first configuration in which it rests against said movable lateral abutment guide and holds it at a position of maximum distance from the other lateral abutment guide and at least one second configuration in which it is released from said movable lateral abutment guide. Preferably, the weight drives said movable lateral abutment guide therewith when the actuator is in the second configuration.

In other words, when the actuator is in the second configuration, the movable lateral abutment guide is free to move under the action of the weight and of the longitudinal edge of the elongated element against which it rests and slides. When the actuator is in the first configuration, the movable lateral abutment guide is blocked and the weight cannot move it.

Preferably, provision is made, at the end of the supply, to move one or both lateral abutment guides away from the respective longitudinal edges, countering the action of the weight.

The actuator preferably starts to operate when the elongated element is stopped, in order to remove the movable lateral abutment guide from the longitudinal edge against which it acts in a manner, for example, so as to execute preparation and/or maintenance operations.

In the passage from the second configuration to the first configuration, the actuator couples the movable lateral abutment guide and drives it (or pushes it), together with the weight constrained thereto, towards the position of maximum distance from the other abutment guide.

Preferably, the actuator comprises a fixed main body and an engagement end movable on command. The engagement end is movable between a retracted position, in which it lies in proximity to the main body, and an extracted position, in which it lies at a maximum distance from the main body. In the retracted position, which corresponds to the first configuration of the above-described actuator, the engagement end holds the movable lateral abutment guide. In the extracted position, the engagement end lies spaced from the movable lateral abutment guide.

Preferably, the lateral aligning device comprises a plurality of support rollers arranged in succession with main rotation axes thereof parallel to each other and configured to receive the elongated element in abutment.

Preferably, the main rotation axes of the support rollers are transverse with respect to the supply direction.

Preferably, the support rollers idly rotate.

The elongated element slides in abutment on a radially external portion of the support rollers and drives them in rotation.

Preferably, each of the support rollers is of omnidirectional type.

The omnidirectional rollers are capable of sliding the elongated element that rests thereon in all directions and with low friction. In other words, the support rollers do not constitute a constraint for the movement of the elongated element thereon. Preferably, each of the support rollers comprises a plurality of annular elements arranged axially adjacent to each other, each free to rotate around a common main rotation axis perpendicular to the supply direction.

Preferably, each of the annular elements comprises a plurality of rollers arranged mutually adjacent along the circumferential extension of the respective annular element, each free to rotate around a respective axis perpendicular to common main rotation axis.

Preferably, the elongated element is free to move laterally on a support on which it rests (preferably on the support rollers) and it is guided in the supply direction substantially only by said lateral abutment guides.

In the absence of lateral abutment guides, the elongated element would be free to move laterally as well. The omnidirectional support rollers in fact allow the abutment guides to guide the elongated element without encountering resistance due to the contact of the surface of the elongated element that rests on the support rollers. In particular, at the start of the dispensing, when the elongated element is not in the correct position, the presence of the omnidirectional rollers allows one of the lateral abutment guides to laterally move said elongated element against the other lateral abutment guide, making it slide practically without friction on the radially external surface thereof formed by the abovementioned rollers. Preferably, each lateral abutment guide comprises a wall which, along the supply direction, is fixed.

Each wall has an abutment surface for the respective longitudinal edge of the elongated element. The wall is continuous and therefore ensures a uniform distribution of the interacting pressures between itself and said longitudinal edge. Preferably, the wall of the movable lateral abutment guide has a plurality of through openings, each traversed by a respective support roller.

During its transverse movement, the wall that defines the movable lateral abutment guide slides around the support rollers.

In an alternative embodiment, each lateral abutment guide comprises at least one slot roller. By slot roller it is generically intended a roller rotatably mounted, preferably idly mounted, around an axis perpendicular to the supply path. The radially external surface of the slot roller is tangent to a longitudinal edge of the elongated element and the peripheral velocity of the radially external surface thereof in the zone of contact with the elongated element is directed like the supply direction. A relative rolling motion is therefore preferably conferred between said lateral abutment guide and the elongated element.

Preferably, the lateral abutment guide comprises a plurality of slot rollers sequentially arranged along a portion of the supply path.

The slot rollers prevent moving the edge of the elongated element against the lateral abutment guide, decreasing the risk of ruining it.

Further characteristics and advantages will be clearer from the detailed description of a preferred but not exclusive embodiment of a method for guiding an elongated element for a process for obtaining tyres for vehicle wheels and an apparatus for obtaining tyres for vehicle wheels in accordance with the present invention.

### Description of the drawings

Such description will be set forth hereinbelow with reference to the set of drawings, provided only as a non-limiting example, in which:
- figure 1 shows a top schematic view of an apparatus for obtaining tyres;
- figure 2 is a side elevation view of an assembly belonging to the apparatus of figure 1;
- figure 3 is a top view of the assembly of figure 2;
- figure 4 is an element of the assembly pursuant to figures 2 and 3 seen according to the arrow A of figure 2;
- figure 5 is a side elevation view of the element of figure 4 with some parts removed in order to better illustrate other parts;
- figure 6 illustrates the element of figure 4 with some parts removed in order to better illustrate other parts and a first operative configuration;
- figure 7 illustrates the element of figure 4 in a second operative configuration;
- figure 8 is a side elevation view of a modified embodiment of the element of figure 4 with some parts removed in order to better illustrate other parts;
- figure 8a is a detail of figure 8 seen from top view;
- figure 9 illustrates the element of figure 8 in a second operative configuration;
- figure 9a is a detail of figure 9 seen from top view;
- figure 10 is a radial half-section of a tyre for vehicle wheels obtained with the process and the apparatus of the present invention.

### Detailed description

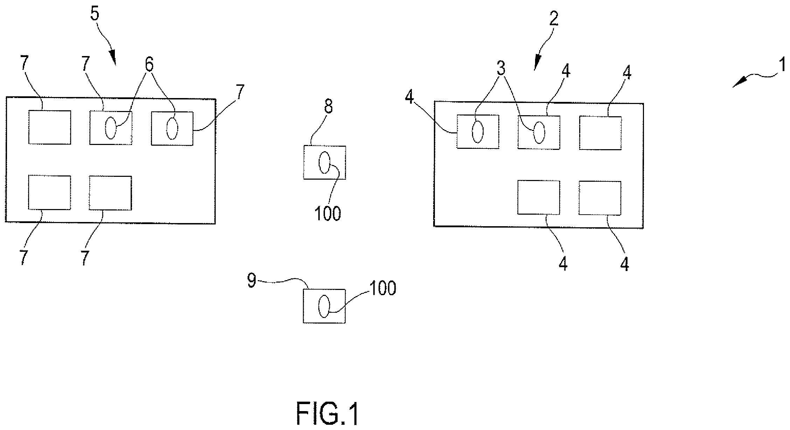

With reference to figure 1, reference number 1 indicates overall an apparatus for obtaining tyres 100 for vehicle wheels in accordance with the present invention.

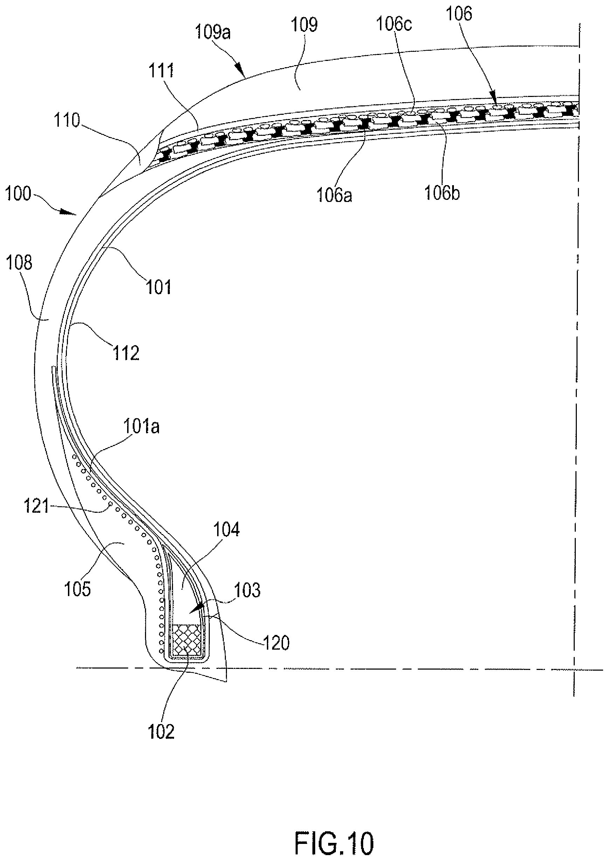

A tyre 100, obtained in said apparatus 1 and according to the method and the process in accordance with the present invention, is illustrated in figure 10 and comprises at least one carcass structure, comprising at least one carcass layer 101 having respectively opposite end flaps respectively engaged with respective anchoring annular structures 102, termed bead cores, possibly associated with a bead filler 104. The zone of the tyre comprising the bead core 102 and the bead filler 104 forms a bead structure 103, intended for anchoring the tyre on a corresponding mounting rim, not illustrated.

Each bead structure is associated with the carcass structure by means of bending backward the opposite lateral edges of the at least one carcass layer 101 around the anchoring annular structure 102, in a manner so as to form the so-called turned-up portions of the carcass 101a.

An anti-abrasive strip 105 made with elastomeric material can be arranged in an external position of each bead structure 103.

The carcass structure is associated with a belt structure 106 comprising one or more belt layers 106a, 106b situated in radial superimposition with respect to each other and with respect to the carcass layer, having metallic or textile reinforcement cords. Such reinforcement cords can have crossed orientation with respect to a direction of circumferential extension of the tyre 100. By "circumferential" direction it is intended a direction generically directed according to the rotation direction of the tyre. In radially more external position with respect to the belt layers 106a, 106b, at least one zero-degree reinforcement layer 106c can be applied, commonly known as "0° belt", which generally incorporates a plurality of reinforcement cords, typically textile cords, oriented in a substantially circumferential direction, thus forming an angle of only a few degrees (e.g. an angle between about 0° and 6°) with respect to the equatorial plane of the tyre, and covered with an elastomeric material.

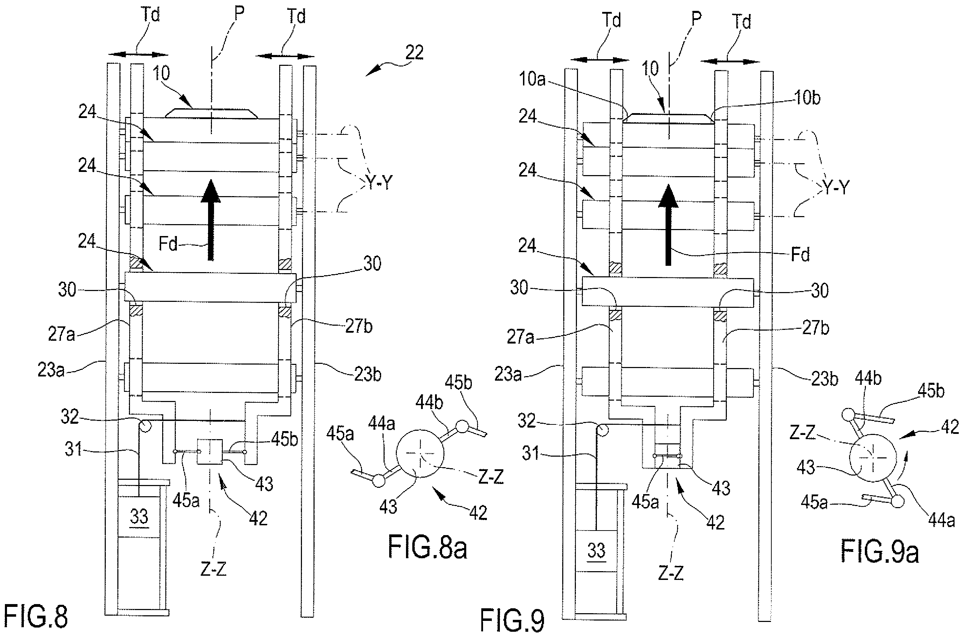

In radially external position with respect to the belt structure 106, a tread band 109 made of elastomeric compound is applied, like other semi-finished products constituting the tyre 100. Respective sidewalls 108 made of elastomeric compound are also applied in axially external position on the lateral surfaces of the carcass structure, each extended from one of the lateral edges of the tread 109 up to the respective bead structure 103. In radially external position, the tread band 109 has a rolling surface 109a intended to come into contact with the ground. Circumferential grooves, which are connected by transverse notches in a manner so as to define a plurality of blocks of various shape and size distributed on the rolling surface 109a, are generally made in this surface 109a, which for the sake of simplicity is represented smooth in figure 9.

An underlayer 111 may possibly be arranged between the belt structure 106 and the tread band 109. A strip constituted by elastomeric material 110, commonly known as "mini-sidewall", may be present in the connection zone between the sidewalls 108 and the tread band 109, such mini-sidewall generally being obtained by means of co-extrusion with the tread band 109 and allowing an improvement of the mechanical interaction between the tread band 109 and the sidewalls 108. Preferably the end portion of the sidewall 108 directly covers the lateral edge of the tread band 109.

In the case of tyres without air chamber, a rubber layer 112, generally known as "liner", which provides the necessary impermeability to the tyre inflation air, can be provided in a position that is radially internal with respect to the carcass layer 101. The rigidity of the tyre sidewall 108 can be improved by providing the tyre bead structure 103 with a reinforcement layer 120 generally known as "flipper" or additional strip-like insert. The "flipper" 120 is a reinforcement layer that is wound around the respective anchoring annular structure 102 and the bead filler 104 in a manner so as to at least partially surround them, said reinforcement layer being arranged between the at least one carcass layer 101 and the bead structure 103. Normally, the "flipper" is in contact with said at least one carcass layer 101 and said bead structure 103. The "flipper" 120 typically comprises a plurality of metallic or textile cords (e.g. made of aramid or rayon) incorporated in a cross-linked elastomeric material.

The tyre bead structure 103 can comprise a further protection layer that is generally known with the term "chafer" 121 or protection strip and which has the function of increasing rigidity and integrity of the bead structure 103. The "chafer" 121 normally comprises a plurality of cords incorporated in a cross-linked elastomeric material. The cords are generally made of textile materials (e.g. aramid or rayon) or of metallic materials (e.g. steel cords).

The abovementioned components of the tyre 100 are obtained on one or more forming drums by moving said drums between different stations for dispensing the elongated elements, at each of which suitable devices apply the aforesaid elongated elements on the drum or drums.

The apparatus 1, schematically illustrated in its entirety in the enclosed figure 1, comprises a carcass building line 2, at which forming drums 3 are moved between different elongated element dispenser stations 4 arranged to form, on each forming drum 3, a carcass sleeve comprising the carcass plies 101, the liner 112, the anchoring annular structures 102, the "flippers" 120, the "chafers" 121 and possibly at least one part of the sidewalls 108.

Simultaneously, in an external sleeve building line 5, one or more auxiliary forming drums 6 are sequentially moved between different work stations 7 arranged to form an external sleeve on each auxiliary drum 6, such sleeve comprising at least the belt structure 106, the tread band 109, the anti-abrasive strips 105 and possibly at least one part of the sidewalls 108.

The plant 1 also comprises an assembly station 8 at which the external sleeve is coupled to the carcass sleeve, in order to define the built green tyre 100.

The built green tyres 100 are finally transferred to at least one shaping, moulding and vulcanisation unit 9.

At least one from among the dispenser stations 4 and the work stations 7 is configured to cut to size an elongated element 10 comprising an elastomeric material (corresponding to one of the abovementioned components of the tyre or to a pre-assembled assembly of multiple said components), to wind it around one of the forming drums 3, 6, depositing it on a radially external surface 3a, 6a with respect to said forming drum 3, 6 while the latter rotates around a rotation axis "X-X" thereof, and to join a head end "H" of said cut-to-size elongated element 10 with a tail end of the same elongated element 10.

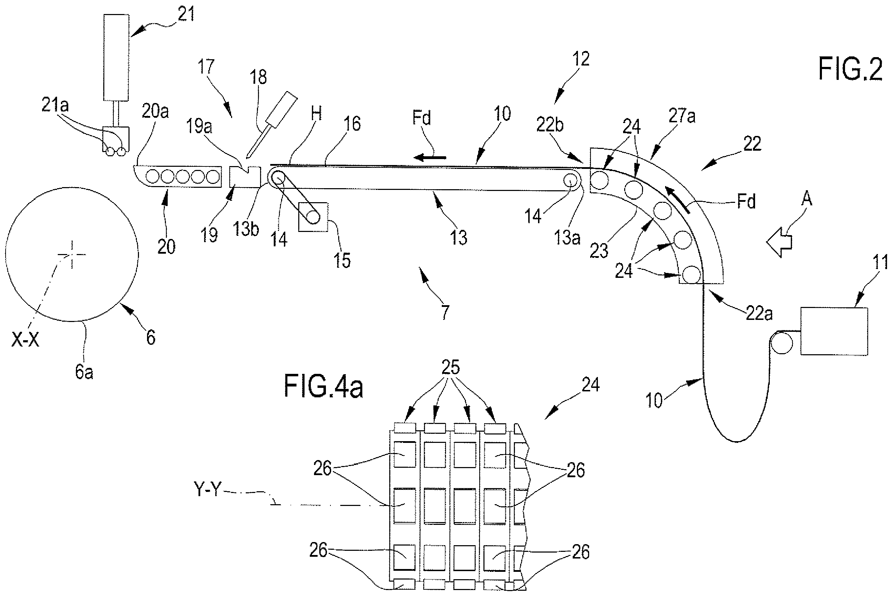

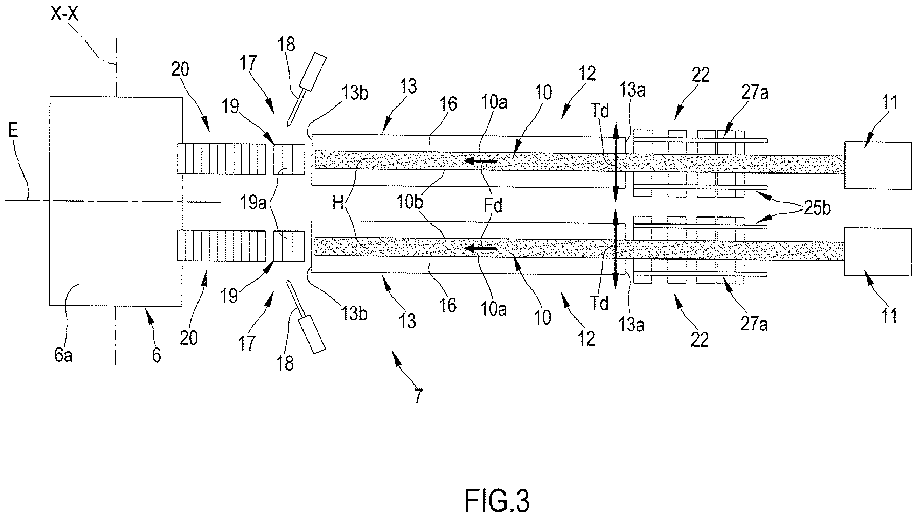

Figures 2 and 3 illustrate a work station 7 set to dispense and deposit, in parallel on the forming drum 6, two elongated elements 10 intended to form, for example, the anti-abrasive strips 105.

In the illustrated non-limiting embodiment, the work station 7 delimits two parallel supply paths, each provided with a dispenser device 11 and with a conveyor 12 (figures 2 and 3).

The following description will make reference to the elements of only one of said two paths, the other mirroring the first.

The dispenser device 11 was schematically shown in the enclosed figures and can comprise a reel-carrier (not shown) that receives, wound in a reel, one of the continuous elongated elements (intended to form, once unrolled and cut to size, one of the two anti-abrasive strips 105).

The conveyor 12 comprises a conveyor belt 13 wound around a pair of pulleys 14 of which at least one is connected to a drive motor 15. An upper branch 16 of the conveyor belt 13 is intended to receive, support and advance one of the elongated elements 10 coming from the respective dispenser device 11. A first end 13a of the conveyor belt 13 is directed towards the dispenser device 11 and a second end 13b of said conveyor belt 13, opposite the first, is directed towards the forming drum 6.

The work station 7 also comprises a cutting unit 17 placed downstream of the conveyor 12 and in proximity to the second end 13b of the conveyor belt 13. The cutting unit 17 comprises a cutting blade 18 and a counter-blade 19. The counter-blade 19 is defined by a base provided with a notch 19a and configured to receive the elongated element 10 in abutment during cutting. The cutting blade 18 is positioned above the counter-blade 19. One end of the cutting blade 18 is configured for being engaged in the notch 19a and transversely cutting the elongated element 10.

Downstream of the cutting unit 17, a support roller 20 is arranged and at a terminal end 20a of the support roller 20, a presser member 21 is situated provided with presser rollers 21a. The support roller 20 supports the elongated element 10 cut to size during the winding thereof on the forming drum 6. The presser member 21 presses the elongated element 10 against the external surface 6a during the winding determined by the rotation of the forming drum 6 around the rotation axis "X-X" thereof.

Upstream of the conveyor 12 and in proximity to the first end 13a of the conveyor belt 13, a lateral aligning device 22 is situated, configured for guiding the elongated element 10 towards the conveyor 12 in a manner such that it maintains a predefined transverse position (with respect to a supply direction "Fd" of the respective elongated element 10).

The lateral aligning device 22 comprises a schematically-represented fixed support frame 23 (e.g. integral with a frame of the conveyor 12 and/or abutted against the ground). The support frame 23 has a first lateral shoulder 23a and a second lateral shoulder 23b. Mounted on the support frame 12 are support rollers 24, which are free to rotate (idle) around respective main rotation axes "Y-Y". The rotation axes "Y-Y" of the support rollers 24 are parallel to each other and, in the illustrated embodiment, do not all lie in a same plane but rather identify a curved surface. Each of the support rollers 24 is pivoted on lateral shoulders 23a, 23b belonging to said support frame 23.

The support rollers 24 have respective portions of the radially external surface thereof on which the elongated element 10 is intended to rest, and hence together they identify a support surface for said elongated element 10 which in the illustrated embodiment is substantially curved and convex. Such curved surface subtends an arc of about 90°.

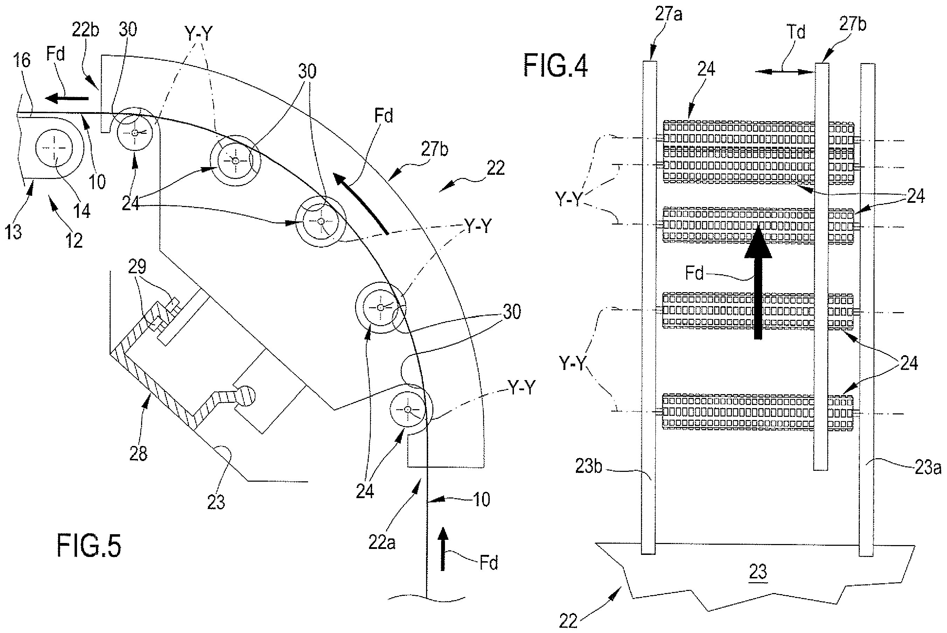

Each of the support rollers 24 is of omnidirectional type, *per* se known (figure 4a). Each support roller 24 comprises a plurality of annular elements 25 arranged axially adjacent to each other and free to rotate around the main rotation axis "Y-Y" of the support roller 24. Each of the annular elements 25 supports a plurality of rollers 26 arranged mutually adjacent along the circumferential extension of the respective annular element 25, each free to rotate around a respective axis perpendicular to main rotation axis "Y-Y".

The lateral aligning device 22 is spatially oriented in a manner such that the elongated element 10 enters through an inlet 22a of said lateral aligning device 22 from the bottom upward and exits horizontally from an outlet 22b of the same lateral aligning device 22. The outlet 22b is aligned with the subsequent conveyor 12.

The lateral aligning device 22 comprises a pair of counter-facing lateral abutment guides 27a, 27b, each arranged on a respective side of at least one portion of the respective supply path that belongs to said lateral aligning device 22. Each of the lateral abutment guides 27a, 27b is defined by a wall which extends orthogonal to the abovementioned surface di support. Neither of the walls 27a, 27b moves in the supply direction "F_{d}".

In a non-illustrated modified embodiment, one or both lateral abutment guides 27a, 27b comprises/comprise a plurality of slot rollers sequentially arranged along a portion of the supply path.

With reference to the embodiment illustrated in the figures from 2 to 7, a first lateral abutment guide 27a of said two guides 27a, 27b is fixed, in the sense that it does not move, not even along a direction that is transverse with respect to the supply path (or to the supply direction "F_{d}"). The first lateral abutment guide 27a is integral with the support frame 23 and constitutes part of the first lateral shoulder 23a of said support frame 23.

The second lateral abutment guide 27b is movable along a transverse direction "T_{d}" on a rail 28 integral with the support frame 23 (illustrated in a cross section in figure 5). The second lateral abutment guide 27b is coupled to the rail 28 by means of small wheels 29 in a manner so as to limit the slide friction to a minimum.

The wall that defines the second lateral abutment guide 27b is provided with through openings 30, each traversed by one of the support rollers 24. The second lateral abutment guide 27b, being moved along the transverse direction "T_{d}", thus slides around said support rollers 24.

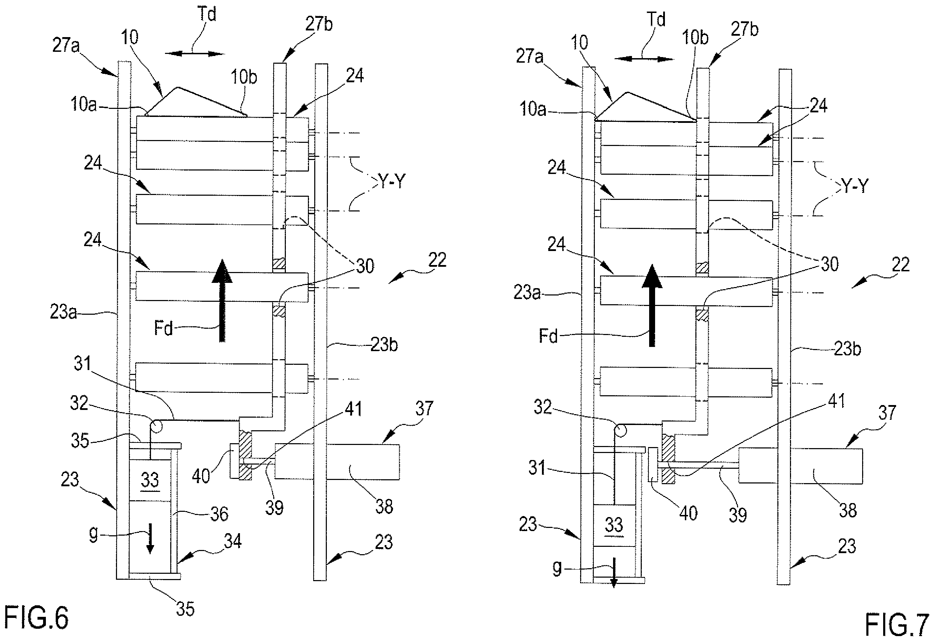

With reference to figures 6 and 7, the second lateral abutment guide 27b is connected to a first end of a cable 31. The cable 31 is partially wound on a transmission pulley 32 rotatably mounted on the frame 23 and interposed between the second lateral abutment guide 27b and the first lateral abutment guide 27a. A weight 33 is hung on a second end of the cable 31, opposite the first, and hangs downward. The weight 33, under the action of the gravity force "g" and by means of the cable 32, pulls the second lateral abutment guide 27b towards the first lateral abutment guide 27a by making it slide on the rail 28. The weight 33 has a mass comprised between about 150g and about 450g, preferably equal to about 300g. The pulley 32 and the cable 31 constitute transmission elements connecting the weight 33 to said movable lateral abutment guide 27b.

The weight 33 is guided along a vertical direction by a guide system 34 placed below the transmission pulley 32. The guide system 34 comprises a pair of plates 35, between which four vertical rods 36 are mounted (of which only two are visible in figures 6 and 7). The vertical rods 36 are arranged at the edges of the weight 33 and are housed within grooves obtained in the weight 33 at said edges; they are housed in a manner so to be able to slide within such grooves. The vertical rods 36 and the plates 35 are fixed with respect to the support frame 23. The weight 33, being vertically moved, slides between said vertical rods 36. The weight 33 and the guide system 34 are situated at the first shoulder 23a of the support frame 23. The lateral aligning device 22 comprises an actuator 37, e.g. pneumatic, mounted on the support frame 23 and engageable with the second lateral abutment guide 27b. The illustrated actuator 37 (figures 6 and 7) comprises a main body 38 fixed to the second lateral shoulder 23b of the support frame 23 and a rod 39 carrying an engagement end 40 and movable on command. The rod 39 passes through a through hole 41 obtained in the wall of the second lateral abutment guide 27b. The engagement end 40 remains situated on the side opposite the abovementioned wall with respect to the main body 38 and is shaped as a plate with greater size than that of the through hole 41, in a manner such that it cannot cross through such hole.

The actuator 37 can be controlled for moving the rod 39 and the engagement end 40 between a retracted position, in which it lies in proximity to the main body 38 (figure 6), and an extracted position, in which it lies at a maximum distance from the main body 38 (figure 7). In the retracted position of figure 7, the engagement end 40 rests against the movable lateral abutment guide 27b and holds it in proximity to the second lateral shoulder 23b of the support frame 23. In the extracted position, the engagement end lies spaced from the second lateral shoulder 23b of the support frame 23 and leaves the second lateral abutment guide 27b free to translate around the rod 39.

The present disclosure also relates to a process for obtaining tyres for vehicle wheels and to a method for guiding an elongated element for a process for obtaining tyres for vehicle wheels.

During use and in accordance with the method and the process according to the invention, at the start of a cycle, each of the two elongated elements 10 coming from the respective dispenser devices 11 lies on the support rollers 24 of the respective lateral aligning device 22 and on the respective conveyor belt 13. The conveyor belt 13 is stopped. The surface of the conveyor belt 13 is such that, due to friction, the elongated element 10 remains anchored without slipping on said conveyor belt 13. A head end "H" of the elongated element 10 rests on the abovementioned conveyor belt 13.

The second lateral abutment guide 27b is maintained blocked by the actuator 37 (figure 6).

The elongated element 10 rests on the support rollers 24 with its first longitudinal edge 10a adjacent to or abutted against the first fixed lateral abutment guide 27a. A second longitudinal edge 10b of the elongated element 10 is spaced from the second movable lateral abutment guide 27b.

The conveyor 12 is driven to advance the elongated element 10 along the supply direction "F_{d}" until the head end "H" is brought onto the forming drum 6, and to apply the head end "H" on the forming drum 6 by means the presser member 21. The forming drum 6 is rotated a predefined angle in order to partially wind the elongated element 10 thereon, until a zone intended to be cut is brought to the cutting unit 17, in a manner so as to define a length of one portion of said elongated element 10 corresponding with the extension of the radially external surface 6a of the forming drum 6.

Simultaneously with (or just before or just after) the starting of the conveyor 12, the actuator 37 is brought into the extracted position and leaves the second lateral abutment guide 27b free to be driven by the weight 33. The weight 33 descends, driven by the gravity force, and moves the second lateral abutment guide 27b towards the first lateral abutment guide 27a. During this movement, the second lateral abutment guide 27b comes to abut against the second longitudinal edge 10b and moves the elongated element 10 against the first lateral abutment guide 27a (figure 7). The omnidirectional rollers 24 substantially do not resist such movement.

The weight 33 is calibrated to exercise a pressure on the longitudinal edges 10a, 10b of the elongated element 10 comprised between about 50g/cm² and about 200g/cm², preferably equal to about 75g/cm².

Possibly, the weight 33 can be substituted with another different mass in order to change said pressure. Alternatively, in order to vary the pressure exerted by the weight, the guide system 34 is configured to be tilted. In this manner, the component of the weight force that drives the second lateral abutment guide 27b is only that parallel to the guide system 34.

When the zone intended to be cut is in position, the conveyor belt 12 and the forming drum 6 are stopped and the cutting blade 18 provides to separate the portion of the elongated element 10 already partly on the forming drum 6 from the remaining portion.

After cutting, the forming drum 6 is once again rotated in order to complete the winding of the aforesaid portion and to join the head end "H" with a tail end of said portion.

At this point, the cycle can be repeated. During each movement of the elongated element 10 along the supply direction "F_{d}" (advancing or retreating movement), the second lateral abutment guide 27b, driven by the weight 33, follows the profile of the second longitudinal edge 10b and always maintains the elongated element 10 against the first lateral abutment guide 27a.

At the end of the processing cycles, the second lateral abutment guide 27b is moved away from the respective second longitudinal edge 27b by retracting the engagement end 40 of the actuator 37. During such movement, the engagement end 40 comes to rest against the portion of the second lateral abutment guide 27b that surrounds the through hole 41 and drives said second lateral abutment guide 27b towards the second lateral shoulder 23b until it is once again blocked.

In a modified embodiment of the lateral aligning device 22, illustrated in figures 8, 8a, 9 and 9a, both lateral abutment guides 27a, 27b are movable. Such embodiment is preferably employed when it is necessary to centre a single elongated element 10 (such as the elongated element cut to size and intended to form the air-impermeable rubber layer (liner), one of the carcass plies, one of the belt layers, the tread band) with respect to an equatorial plane "E" of the forming drum 6.

The lateral aligning device 22 comprises a first movable lateral abutment guide 27a side-by-side the first shoulder 23a of the support frame 23 and a second movable lateral abutment guide 27b side-by-side the second shoulder 23b of the support frame 23. Both said first and second lateral abutment guides 27a, 27b translate on the rail 28 (of the type illustrated in the embodiment of figure 5) along the transverse direction "T_{d}".

The first lateral abutment guide 27a has a shape (with respect to a centreline plane "P" of the lateral aligning device 22) that substantially mirrors the second lateral abutment guide 27b described for the preceding embodiment. In particular, it also has through openings for the support rollers 24.

The second lateral abutment guide 27b substantially mirrors second lateral abutment guide 27b described for the preceding embodiment. The second lateral abutment guide 27b is also connected to the weight 33 (by means of the cable 31, the transmission pulley 32 visible in figures 8 and 9) and to the actuator 37 (not visible in figures 8 and 9) in a manner substantially identical to that illustrated for the previously-described embodiment (figures 4-7).

The weight 33 drives the second lateral abutment guide 27b which in turn moves the first lateral abutment guide 27a (in an opposite direction and with mirrored motion) by means of a synchronisation mechanism 42 operatively connected to both said lateral abutment guides 27a, 27b.

In a modified embodiment, not illustrated, a weight is coupled (by means of a respective transmission pulley and a respective cable) also to the first lateral abutment guide 27a.

The synchronisation mechanism 42 comprises (figures 8, 8a, 9, 9a) a pin 43 mounted on the support frame 23 and freely rotatable around a main axis "Z-Z" thereof. The pin 43 has a first radial arm 44a and a second radial arm 44b. A first rod 45a connects, by means of respective articulations, the end of the first arm 44a with the first lateral abutment guide 27a. A second rod 45b connects, by means of respective articulations, the end of the second arm 44b with the second lateral abutment guide 27b.

During use, when the actuator 37 is brought into the extracted position and leaves the second lateral abutment guide 27b free to be driven by the weight 33, the weight 33 descends, driven by the gravity force, and moves the second lateral abutment guide 27b towards the first lateral abutment guide 27a. During such movement, the second lateral abutment guide 27b pushes the second rod 45b which, in turn, pushes the second arm 44b and rotates the pin 43 around the main axis "Z-Z" thereof (in anticlockwise sense in figures 8a and 9a). Due to such rotation, the first arm 44a pulls the first rod 45a which, in turn, pulls the first lateral abutment guide 27a towards the second lateral abutment guide 27b.

The first lateral abutment guide 27a and the second lateral abutment guide 27b are moved simultaneously and in a mirrored manner towards the centreline plane "P" and come to rest and push against the longitudinal edges 10a, 10b of the elongated element 10, centring said elongated element 10 on said centreline plane "P".

## Claims

1. A method for guiding an elongated element for a process for obtaining tyres for vehicle wheels, comprising:
advancing an elongated element (10) comprising an elastomeric material along a supply direction (F_{d}), wherein the elongated element (10) extends longitudinally along said supply direction (F_{d});
interposing, during the advancement, the elongated element (10) between two lateral abutment guides (27a, 27b) resting against opposite longitudinal edges (10a, 10b) of said elongated element (10);
maintaining said lateral abutment guides (27a, 27b) against said longitudinal edges (10a, 10b) during the advancement of the elongated element (10), driving, by means of at least one weight (33) movable under the action of the gravity force, at least one of the lateral abutment guides (27a, 27b) against the respective longitudinal edge (10a, 10b);
**characterized in that** said at least one weight (33) is movable along a guide system (34), wherein the guide system (34) prevents the weight (33) from oscillating and thus exerting a variable pressure on the elongated element (10).

2. A method as claimed in claim 1, comprising: tilting the guide system (34) in order to vary the pressure exerted by the weight (33).

3. A method as claimed in one of the preceding claims, wherein each of the lateral abutment guides (27a, 27b) exerts a pressure on the respective longitudinal edge (10a, 10b) comprised between about 50g/cm² and about 200g/cm².

4. An apparatus for obtaining tyres for vehicle wheels, comprising:
at least one device (11) for dispensing an elongated element (10) comprising an elastomeric material;
at least one conveyor (12) for advancing the elongated element (10) towards a forming drum (3, 6), wherein the dispenser device (11) and the conveyor (12) delimit a supply path;
at least one device (22) for laterally aligning the elongated element (10) operatively active along the supply path and comprising:
at least one pair of counter-facing lateral abutment guides (27a, 27b),
each arranged on a respective side of at least one portion of the supply path; wherein at least one of said lateral abutment guides (27a, 27b) is free to move along a direction (T_{d}) that is transverse with respect to the supply path;
at least one weight (33);
transmission elements (31, 32) connecting the weight (33) to said at least one movable lateral abutment guide (27b);
wherein the transmission elements (31, 32) are configured to allow the weight (33) to move under the action of the gravity force and to drive said movable lateral abutment guide (27a) therewith along said transverse direction (T_{d}) and towards the other lateral abutment guide (27a);
**characterized in that** the lateral aligning device (22) further comprises a guide system (34) and wherein the weight (33) is movable along said guide system (34).

5. An apparatus as claimed in claim 4, wherein the transmission elements (31, 32) comprise at least one flexible element (31) connected to the weight (33) and to the movable lateral abutment guide (27b) and at least one transmission pulley (32), wherein the flexible element (31) is at least partially wound around the transmission pulley (32).

6. An apparatus as claimed in claims 4 or 5, wherein said guide system (34) comprises one or more rods (36) on which the weight (33) is inserted or between which the weight (33) is slidably guided.

7. An apparatus as claimed in claims 4, 5 or 6, wherein the guide system (34) is configured to be tilted in order to vary the pressure exerted by the weight (33).

8. An apparatus as claimed in one of the preceding claims 4 to 7, wherein each of the lateral abutment guides (27a, 27b) is connected to a respective weight (33).

9. An apparatus as claimed in one of the preceding claims 4 to 8, wherein said at least one weight (33) has a mass comprised between about 150g and about 450g.

10. An apparatus as claimed in one of the preceding claims 4 to 9, wherein the lateral aligning device (22) comprises an actuator (37) configured to move one lateral abutment guide (27b) away from the other (27a).

11. An apparatus as claimed in the preceding claim, wherein the actuator (37) is movable between a first configuration wherein it rests against said movable lateral abutment guide (27b) and holds it at a position of maximum distance from the other lateral abutment guide (27a) and at least one second configuration wherein it is released from said movable lateral abutment guide (27b).

12. An apparatus as claimed in the preceding claim, wherein the weight (33) is free to drive said movable lateral abutment guide (27b) therewith when the actuator (37) is in the second configuration.

13. An apparatus as claimed in one of the preceding claims 4 to 12, wherein the lateral aligning device (22) comprises a plurality of support rollers (24) arranged in succession with the main rotation axes (Y-Y) thereof parallel to each other and configured to receive the elongated element (10) in abutment.

14. An apparatus as claimed in claim 13, wherein each of the support rollers (24) comprises a plurality of annular elements (25) arranged axially adjacent to each other and each free to rotate around a main common rotation axis (Y-Y) perpendicular to the supply direction (F_{d}).

15. An apparatus as claimed in the preceding claim, wherein each of the annular elements (25) comprises a plurality of rollers (26) arranged mutually adjacent along the circumferential extension of the respective annular element (25) and each free to rotate around a respective axis perpendicular to the main common rotation axis (Y-Y).

## Patentansprüche

1. Verfahren zum Führen eines länglichen Elements für einen Prozess zum Erhalt von Reifen für Fahrzeugräder, wobei das Verfahren die folgenden Schritte umfasst:
Vorschieben eines länglichen Elements (10) umfassend ein Elastomermaterial entlang einer Zuführrichtung (F_{d}), wobei das längliche Element (10) sich der Länge nach entlang der Zuführrichtung (F_{d}) erstreckt;
Einbringen des länglichen Elements (10) während des Vorschubs zwischen zwei seitliche Führungsanschläge (27a, 27b), die gegen entgegengesetzte Längskanten (10a, 10b) des länglichen Elements (10) anliegen;
Halten der seitlichen Führungsanschläge (27a, 27b) gegen die Längskanten (10a, 10b) während des Vorschubs des länglichen Elements (10),
Treiben zumindest eines der seitlichen Führungsanschläge (27a, 27b) gegen die jeweilige Längskante (10a, 10b) mittels zumindest eines Gewichts (33), das unter Schwerkraftwirkung beweglich ist;
**dadurch gekennzeichnet, dass** das zumindest eine Gewicht (33) entlang eines Führungssystems (34) beweglich ist, wobei das Führungssystem (34) verhindert, dass das Gewicht (33) schwingt und somit einen variablen Druck auf das längliche Element (10) ausübt.

2. Verfahren nach Anspruch 1, umfassend das Neigen des Führungssystems (34), um den Druck zu variieren, der durch das Gewicht (33) ausgeübt wird.

3. Verfahren nach einem der vorhergehenden Ansprüche, wobei jeder der seitlichen Führungsanschläge (27a, 27b) einen Druck auf die jeweilige Längskante (10a, 10b) zwischen etwa 50 g/cm² und etwa 200 g/cm² ausübt.

4. Vorrichtung zum Erhalt von Reifen für Fahrzeugräder, wobei die Vorrichtung umfasst:
zumindest eine Einrichtung (11a) zum Ausgeben eines länglichen Elements (10) umfassend ein Elastomermaterial;
zumindest eine Fördereinrichtung (12) zum Vorschieben des länglichen Elements (10) zu einer Formungstrommel (3, 6) hin, wobei die Ausgabeeinrichtung (11) und die Fördereinrichtung (12) einen Zuführpfad begrenzen;
zumindest eine Einrichtung (22) zum seitlichen Ausrichten des länglichen Elements (10), die wirkmäßig entlang des Zuführpfads aktiv ist und umfasst:
zumindest ein Paar von in entgegengesetzte Richtungen weisenden seitlichen Führungsanschlägen (27a, 27b), die jeweils auf einer jeweiligen Seite zumindest eines Abschnitts des Zuführpfads angeordnet sind; wobei zumindest einer der seitlichen Führungsanschläge (27a, 27b) sich frei entlang einer Richtung (T_{d}) bewegt, die quer in Bezug auf den Zuführpfad verläuft;
zumindest ein Gewicht (33);
Übertragungselemente (31, 32), die das Gewicht (33) mit dem zumindest einen beweglichen seitlichen Führungsanschlag (27b) verbinden;
wobei die Übertragungselemente (31, 32) dazu ausgestaltet sind, dem Gewicht (33) zu erlauben, sich unter Schwerkraftwirkung zu bewegen und den beweglichen seitlichen Führungsanschlag (27a) dadurch entlang der Querrichtung (T_{d}) und zu dem anderen seitlichen Führungsanschlag (27a) hin anzutreiben;
**dadurch gekennzeichnet, dass** die seitliche Ausrichteinrichtung (22) ferner ein Führungssystem (34) umfasst, und wobei das Gewicht (33) entlang des Führungssystems (34) beweglich ist.

5. Vorrichtung nach Anspruch 4, wobei die Übertragungselemente (31, 32) zumindest ein flexibles Element (31), das mit dem Gewicht (33) und mit dem beweglichen seitlichen Führungsanschlag (27b) und zumindest einer Übertragungsscheibe (32) verbunden ist, umfassen, wobei das flexible Element (31) zumindest zum Teil um die Übertragungsscheibe (32) gewickelt ist.

6. Vorrichtung nach Anspruch 4 oder 5, wobei das Führungssystem (34) eine oder mehrere Stangen (36) umfasst, auf welche das Gewicht (33) aufgesetzt ist oder zwischen welchen das Gewicht (33) verschiebbar geführt ist.

7. Vorrichtung nach Anspruch 4, 5 oder 6, wobei das Führungssystem (34) dazu ausgestaltet ist, geneigt zu werden, um den Druck zu variieren, der durch das Gewicht (33) ausgeübt wird.

8. Vorrichtung nach einem der vorhergehenden Ansprüche 4 bis 7, wobei jeder der seitlichen Führungsanschläge (27a, 27b) mit einem jeweiligen Gewicht (33) verbunden ist.

9. Vorrichtung nach einem der vorhergehenden Ansprüche 4 bis 8, wobei das zumindest eine Gewicht (33) eine Masse zwischen etwa 150 g und etwa 450 g aufweist.

10. Vorrichtung nach einem der vorhergehenden Ansprüche 4 bis 9, wobei die seitliche Ausrichteinrichtung (22) ein Stellglied (37) umfasst, das dazu ausgestaltet ist, einen seitlichen Führungsanschlag (27b) von dem anderen (27a) weg zu bewegen.

11. Vorrichtung nach dem vorhergehenden Anspruch, wobei das Stellglied (37) zwischen einer ersten Konfiguration, in welcher es gegen den beweglichen seitlichen Führungsanschlag (27b) anliegt und ihn an einer Position des maximalen Abstands von dem anderen seitlichen Führungsanschlag (27a) hält, und zumindest einer zweiten Konfiguration beweglich ist, in welcher es von dem beweglichen seitlichen Führungsanschlag (27b) gelöst ist.

12. Vorrichtung nach dem vorhergehenden Anspruch, wobei das Gewicht (33) frei ist, den beweglichen seitlichen Führungsanschlag (27b) mit anzutreiben, wenn das Stellglied (37) in der zweiten Konfiguration ist.

13. Vorrichtung nach einem der vorhergehenden Ansprüche 4 bis 12, wobei die seitliche Ausrichteinrichtung (22) eine Vielzahl von Stützrollen (24) umfasst, die aufeinanderfolgend mit parallel zueinander ausgerichteten Drehachsen (Y-Y) angeordnet und dazu ausgestaltet sind, das längliche Element (10) daran anliegend aufzunehmen.

14. Vorrichtung nach Anspruch 13, wobei jede der Stützrollen (24) eine Vielzahl von ringförmigen Elementen (25) umfasst, die axial benachbart zueinander angeordnet sind und sich jeweils frei um eine gemeinsame Hauptdrehachse (Y-Y) senkrecht auf die Zuführrichtung (F_{d}) drehen können.

15. Vorrichtung nach dem vorhergehenden Anspruch, wobei jedes der ringförmigen Elemente (25) eine Vielzahl von Laufrollen (26) umfasst, die zueinander benachbart entlang der Umfangserstreckung des jeweiligen ringförmigen Elements (25) angeordnet sind und sich jeweils frei um eine jeweilige Achse senkrecht auf die gemeinsame Hauptdrehachse (Y-Y) drehen können.

## Revendications

1. Procédé pour guider un élément allongé pour un procédé d'obtention de pneus pour roues de véhicule, comprenant le fait :
de faire avancer un élément allongé (10) comprenant un matériau élastomère le long d'une direction d'alimentation (F_{d}), où l'élément allongé (10) s'étend longitudinalement le long de ladite direction d'alimentation (F_{d}) ;
d'interposer, lors de l'avancement, l'élément allongé (10) entre deux guides de butée latéraux (27a, 27b) reposant contre des bords longitudinaux opposés (10a, 10b) dudit élément allongé (10) ;
de maintenir lesdits guides de butée latéraux (27a, 27b) contre lesdits bords longitudinaux (10a, 10b) lors de l'avancement de l'élément allongé (10), d'entraîner, au moyen d'au moins un poids (33) mobile sous l'action de la force de gravité, au moins l'un des guides de butée latéraux (27a, 27b) contre le bord longitudinal respectif (10a, 10b) ;
**caractérisé en ce que** ledit au moins un poids (33) est mobile le long d'un système de guidage (34), où le système de guidage (34) empêche le poids (33) d'osciller et d'exercer ainsi une pression variable sur l'élément allongé (10) .

2. Procédé tel que revendiqué dans la revendication 1, comprenant le fait : d'incliner le système de guidage (34) afin de faire varier la pression exercée par le poids (33).

3. Procédé tel que revendiqué dans l'une des revendications précédentes, dans lequel chacun des guides de butée latéraux (27a, 27b) exerce une pression sur le bord longitudinal respectif (10a, 10b) comprise entre environ 50 g/cm² et environ 200 g/cm².

4. Appareil pour obtenir des pneus pour roues de véhicule, comprenant :
au moins un dispositif (11) pour distribuer un élément allongé (10) comprenant un matériau élastomère ;
au moins un transporteur (12) pour faire avancer l'élément allongé (10) vers un tambour de formation (3, 6), où le dispositif de distribution (11) et le transporteur (12) délimitent un chemin d'alimentation ;
au moins un dispositif (22) pour aligner latéralement l'élément allongé (10) actif de manière fonctionnelle le long du chemin d'alimentation et comprenant :
au moins une paire de guides de butée latéraux opposés (27a, 27b), chacun étant agencé sur un côté respectif d'au moins une partie du chemin d'alimentation ; où au moins l'un desdits guides de butée latéraux (27a, 27b) est libre de se déplacer le long d'une direction (T_{d}) qui est transversale par rapport au chemin d'alimentation ;
au moins un poids (33) ;
des éléments de transmission (31, 32) reliant le poids (33) audit au moins un guide de butée latéral mobile (27b) ;
dans lequel les éléments de transmission (31, 32) sont configurés pour permettre au poids (33) de se déplacer sous l'action de la force de gravité et d'entraîner avec lui ledit guide de butée latéral mobile (27a) le long de ladite direction transversale (T_{d}) et vers l'autre guide de butée latéral (27a) ;
**caractérisé en ce que** le dispositif d'alignement latéral (22) comprend en outre un système de guidage (34) et dans lequel le poids (33) est mobile le long dudit système de guidage (34).

5. Appareil tel que revendiqué dans la revendication 4, dans lequel les éléments de transmission (31, 32) comprennent au moins un élément flexible (31) relié au poids (33) et au guide de butée latéral mobile (27b) et au moins une poulie de transmission (32), où l'élément flexible (31) est au moins partiellement enroulé autour de la poulie de transmission (32).

6. Appareil tel que revendiqué dans la revendication 4 ou 5, dans lequel ledit système de guidage (34) comprend une ou plusieurs tige(s) (36) sur laquelle/lesquelles le poids (33) est inséré ou entre lesquelles le poids (33) est guidé en coulissement.

7. Appareil tel que revendiqué dans la revendication 4, 5 ou 6, dans lequel le système de guidage (34) est configuré pour être incliné afin de faire varier la pression exercée par le poids (33).

8. Appareil tel que revendiqué dans l'une des revendications précédentes 4 à 7, dans lequel chacun des guides de butée latéraux (27a, 27b) est relié à un poids respectif (33).

9. Appareil tel que revendiqué dans l'une des revendications précédentes 4 à 8, dans lequel ledit au moins un poids (33) a une masse comprise entre environ 150 g et environ 450 g.

10. Appareil tel que revendiqué dans l'une des revendications précédentes 4 à 9, dans lequel le dispositif d'alignement latéral (22) comprend un actionneur (37) configuré pour déplacer un guide de butée latéral (27b) loin de l'autre (27a).

11. Appareil tel que revendiqué dans la revendication précédente, dans lequel l'actionneur (37) est mobile entre une première configuration dans laquelle il repose contre ledit guide de butée latéral mobile (27b) et le maintient à une position de distance maximale de l'autre guide de butée latéral (27a) et au moins une deuxième configuration dans laquelle il est libéré dudit guide de butée latéral mobile (27b) .

12. Appareil tel que revendiqué dans la revendication précédente, dans lequel le poids (33) est libre d'entraîner avec lui ledit guide de butée latéral mobile (27b) lorsque l'actionneur (37) est dans la deuxième configuration.

13. Appareil tel que revendiqué dans l'une des revendications précédentes 4 à 12, dans lequel le dispositif d'alignement latéral (22) comprend une pluralité de rouleaux de support (24) agencés successivement avec leurs axes de rotation principaux (Y-Y) parallèles entre eux et configurés pour recevoir l'élément allongé (10) en butée.

14. Appareil tel que revendiqué dans la revendication 13, dans lequel chacun des rouleaux de support (24) comprend une pluralité d'éléments annulaires (25) agencés de manière axialement adjacente les uns aux autres et chacun étant libre de tourner autour d'un axe de rotation commun principal (Y-Y) perpendiculaire à la direction d'alimentation (F_{d}).

15. Appareil tel que revendiqué dans la revendication précédente, dans lequel chacun des éléments annulaires (25) comprend une pluralité de rouleaux (26) agencés de manière mutuellement adjacente le long de l'extension circonférentielle de l'élément annulaire respectif (25) et chacun étant libre de tourner autour d'un axe respectif perpendiculaire à l'axe de rotation commun principal (Y-Y).
